Europäisches Patentamt

European Patent Office

Office européen des brevets

(11) Veröffentlichungsnummer: **0 253 973 B1**

(12) **EUROPÄISCHE PATENTSCHRIFT**

(45) Veröffentlichungstag der Patentschrift: 09.10.91

(51) Int. Cl.⁵: **C04B 35/58**

(21) Anmeldenummer: 87106841.7

(22) Anmeldetag: 12.05.87

(54) Sinterfähige Siliziumnitrid-Pulver mit Sinteradditiven und Verfahren zu ihrer Herstellung.

(30) Priorität: 24.05.86 DE 3617488

(43) Veröffentlichungstag der Anmeldung:
27.01.88 Patentblatt 88/04

(45) Bekanntmachung des Hinweises auf die
Patenterteilung:
09.10.91 Patentblatt 91/41

(84) Benannte Vertragsstaaten:
CH DE FR GB LI SE

(56) Entgegenhaltungen:
US-A- 4 073 845

SPRECHSAAL, Band 118, Nr. 6, Juni 1985,
Seiten 525-528, Coburg; U. HAESE:
"Metallfreies Gegenstrahlmahlen keramischer Produkte und Gläser in Forschung
und Produktion"

CHEMICAL ABSTRACTS, Band 99, Nr. 14, 3.
Oktober 1983, Seite 267, Zusammenfassung
Nr. 109670p, Columbus, Ohio, US; & JP-A-58
64 280 (SUMITOMO ELECTRIC INDUSTRIES,
LTD) 16-04-1983

(73) Patentinhaber: BAYER AG

W-5090 Leverkusen 1 Bayerwerk(DE)

(72) Erfinder: Wickel, Ulrike, Dr.
Doerperhofstrasse 39
W-4150 Krefeld 1(DE)
Erfinder: Franz, Gerhard,Dr.
Erich-Klausener-Strasse 44
W-4150 Krefeld 1(DE)
Erfinder: Laubach, Benno, Dr.
Bodelschwinghstrasse 22
W-4150 Krefeld 1(DE)

## Beschreibung

Gegenstand der Erfindung sind $Si_3N_4$-Pulver mit Sinteradditiven mit einer mittleren Teilchengröße von < 1 μm und einem geringen Gehalt an metallischen Verunreinigungen. Die Erfindung betrifft ferner ein Verfahren zur Herstellung der genannten $Si_3N_4$-Pulver mit Sinteradditiven.

Verfahren der Gasdrucksinterung für die Herstellung von keramischen Formteilen aus $Si_3N_4$-Pulvern haben mehr und mehr an Bedeutung gewonnen. Die Gasdrucksinterung hat gegenüber dem Heißpreßverfahren den Vorteil, daß beliebig komplizierte Formen darstellbar sind, und gegenüber dem heißisostatischen Pressen den der wesentlich geringeren Verfahrenskosten.

$Si_3N_4$-Pulver sind jedoch in reiner Form nicht sinteraktiv. Erst durch Zufügen von sogenannten Sinterhilfen kann eine Sinterfähigkeit und damit eine vollständige Verdichtung des Materials erreicht werden. Als Sinteradditive haben sich in vielen Fällen oxidische Materialien, wie z.B. MgO, $Al_2O_3$, $Y_2O_3$ und $La_2O_3$, aber auch nichtoxidische Substanzen wie AlN, $Mg_3N_2$ etc. bewährt. Bei der Sinterung bilden die Sinteradditive zusammen mit einem Teil des keramischen Materials flüssige Phasen und leiten so den Mechanismus der Flüssigphasensinterung ein. Nach der Sinterung liegen die Sinterhilfen als Sekundärphasen im Gefüge vor.

Das Gefüge des gesinterten Körpers und damit seine Festigkeit, eine der für keramische Bauteile bedeutendsten Kenngrößen, wird nun u.a. entscheidend dadurch beeinflußt, wie gleichmäßig die Sekundärphase vor, während und nach der Sinterung im Gefüge verteilt ist. Ist die flüssige Phase während des Sintervorganges inhomogen verteilt, so bedingt dies nach beendeter Sinterung ein inhomogenes Gesamtgefüge. Dadurch wird zum einen die statische Sicherheit bei der Vorhersage der zu erwartenden Festigkeitswerte der gesinterten Keramik vermindert. Besonders negative Folgen hat eine durch ungleichmäßige Verteilung bedingte unvollständige Gleichgewichtseinstellung bei der Bildung der Flüssigphase dann, wenn diese dadurch nicht, wie bei vollständiger Gleichgewichtseinstellung erwartet, nach dem Abkühlen rekristallisiert werden kann, sondern glasig erstarrt im Gefüge vorliegt. Glasige Sekundärphasen erweichen schon bei wesentlich tieferen Temperaturen als kristalline und verursachen dadurch einen drastischen Abfall der Hochtemperaturfestigkeit. Daher ist eine homogene, dem chemischen Gleichgewicht entsprechende Bildung der flüssigen Phase ein wichtiges Kriterium bei der Gasdrucksinterung von $Si_3N_4$.

Will man eine homogene Bildung der Flüssigphase erreichen, müssen die Sinterhilfen schon vor der Sinterung möglichst gleichmäßig verteilt im Material vorliegen. Dazu werden im allgemeinen die $Si_3N_4$-Pulver und die pulverförmigen Sinterhilfen in Naßmühlen (Attritor, Kugelmühle, Planetenmühle etc.) miteinander vermahlen. Dadurch erreicht man zum einen eine Desagglomeration der Pulver und zum anderen eine, statistisch über das Gesamtmaterial gesehen, gleichmäßige Verteilung der Sinteradditive im Ausgangsmaterial.

Durch Naßmahlungen hergestellte $Si_3N_4$-Pulver weisen jedoch immer noch entscheidende Nachteile auf. Diese kommen einmal durch den Abrieb von den Mahlkörpern zustande, darüber hinaus erfolgt eine Reagglomeration der Pulver bei der Trocknung, was wiederum zu relativ harten Agglomeraten führt.

Die Aufgabe der vorliegenden Erfindung ist daher die Bereitstellung eines sinterfähigen $Si_3N_4$-Pulvers, welches diese Nachteile nicht aufweist.

Überraschenderweise wurden nun solche $Si_3N_4$-Pulver gefunden. Gegenstand der vorliegenden Erfindung ist ein sinterfähigs $Si_3N_4$-Pulver mit Sinteradditiven mit einer mittleren Teilchengröße der Agglomerate von < 1 μm, welches dadurch gekennzeichnet ist, daß keine Teilchen mit einem Durchmesser > 100 μm vorhanden sind, der Gesamtgehalt an metallischen Verunreinigungen < 1000 ppm, insbesondere der Eisengehalt < 200 ppm ist und die Sinteradditive gleichmäßig über die Gesamtpulvermenge verteilt sind.

Besonders bevorzugt ist ein erfindungsgemäßes $Si_3N_4$-Pulver, bei dem der Gesamtgehalt an metallischen Verunreinigungen < 200 ppm ist. Das erfindungsgemäße $Si_3N_4$-Pulver kann verschiedene Sinteradditive enthalten, wobei jedoch ein bevorzugtes Sinteradditiv $Li_2O$, BeO, MgO, $B_2O_3$, $Al_2O_3$, $Ga_2O_3$, $Sc_2O_3$, $Y_2O_3$, $La_2O_3$, $TiO_2$, $ZrO_2$, $HfO_2$, $Cr_2O_3$, ein Oxid der Seltenen Erden oder ein Gemisch von zwei oder mehreren der genannten Oxide ist.

Besonders bevorzugte nichtoxidische Sinteradditive sind AlN oder $Mg_3N_2$.

Gegenstand dieser Erfindung ist auch ein Verfahren zur Herstellung des erfindungsgemäßen Pulvers, welches dadurch gekennzeichnet ist, daß ein agglomeriertes $Si_3N_4$-Pulver mit einem Gehalt an metallischen Veruneinigungen unter 1000 ppm, bevorzugt unter 200 ppm, und Sinteradditivpulver gemeinsam in einer Spiralstrahlmühle gemahlen werden.

Es muß als ausgesprochen überraschend bezeichnet werden, daß über eine Trockenmahlung in Spiralstrahlmühlen eine gleichmäßige Vermischung von $Si_3N_4$-Pulvern und Sinteradditiven erreicht werden kann, ohne daß das Material durch Abrieb verunreinigt wird und ohne daß es anschießend zur Bildung harter Agglomerate kommt. Aufgrund der Tatsache, daß Aufgabe-Korngrößen von $Si_3N_4$-Pulvern und Sinteradditiv-Pulvern unterschiedlich sind, war eigentlich eine Entmischung bei der Spiralstrahlmahlung zu erwarten, da durch die gleichzeitig mit der Mahlung erfolgende Sichtung zunächst die feinsten Kornfraktionen und erst nach längerer Mahldauer die etwas gröberen Kornfraktionen ausgetragen werden. So ist aus der Dissertation G. Wötting, Berlin 1983 bekannt, daß Luftstrahlmahlungen bei $Si_3N_4$-Pulvern für Mischmahlungen nicht geeignet seien. Im Gegensatz dazu treten beim erfindungsgemäßen Verfahren keine Entmischungen auf. Vielmehr führen Spiralstrahlmahlungen von einem grob vorgemischten Pulver zu einer gleichmäßigen Verteilung der Sinterhilfen im $Si_3N_4$-Pulver. Die gleichmäßige Verteilung kann dabei durch Stichprobenanalysen aus einer größeren Produktmenge nachgewiesen werden.

Besonders vorteilhaft ist, daß bei der Mahlung gleichzeitig noch die Agglomerate der $Si_3N_4$- und Sinteradditivpulver zerschlagen werden und durch die gleichzeitig mit der Mahlung erfolgende Sichtung ein überkornfreies Produkt erhalten wird.

Besonders bevorzugt ist die Ausführungsform des erfindungsgemäßen Verfahrens, bei dem die Mahlkammer, die Rohrleitungen, die Produkteintrittsdüse und andere Mühlenteile, mit denen das Produkt in Berührung kommt, aus einem nichtmetallischen Werkstoff hergestellt sind. Hierdurch kann jeglicher Metallabrieb und dadurch eine Verunreinigung der für eine Sinterung benötigten möglichst reinen Pulver vermieden werden. Besonders bewährt haben sich der sehr abriebfeste Kunststoff Vulkollan® und die verschleißarmen keramischen Werkstoffe $B_4C$, $Al_2O_3$, SiC und/oder $Si_3N_4$.

Um darüber hinaus störende Verunreinigungen zu vermeiden, empfiehlt es sich, daß das gemahlene Pulver an einem Filtersack aus Nadelfilz, Kunststoffgewebe oder kunststoffbeschichtetem Gewebe abgeschieden wird.

Während der Mahlung sollte als Mahlgas Luft, Stickstoff und/oder Argon eingesetzt werden, wobei der Druck des Mahlgases bevorzugt zwischen 2 und 10 bar Überdruck beträgt.

Im Gegensatz zu dem Stand der Technik angehörenden $Si_3N_4$-Pulvern zeichnet sich das erfindungsgemäße $Si_3N_4$-Pulver durch eine Überkornfreiheit aus. Die Überkornfreiheit wird dabei durch Grindometermessungen mit einer Hegman-Lehre nach DIN 53 203 nachgewiesen. Diese Messungen stellen eine für anorganische Pigmente übliche Abtestmethode dar, die bislang für keramische Pulver allerdings nicht angewendet wurde. Teilchengrößenbestimmungen wurden bei keramischen Pulvern bisher mit den wesentlich nachweisschwächeren Methoden, wie z.B. mit Zählverfahren (Laserbeugung, Coulter-Counter etc.), mit Sedimentationsanalysen sowie mit Siebrückstandsbestimmungen durchgeführt, mit denen wenige grobe Teilchen nicht mehr erfaßt werden können.

Die Abtestung bekannter $Si_3N_4$-Pulver mit der Hegmann-Lehre zeigte, daß diese trotz geringer mittlerer Teilchengröße von z.T. < 1 $\mu m$ erhebliche Anteile an störendem Überkorn von > 100 $\mu m$, z.T. sogar > 250 um enthalten.

Das erfindungsgemäße $Si_3N_4$-Pulver hingegen ist ein überkornfreies, desagglomeriertes, reines, mit Sinteradditiven vermischtes Pulver, das ohne weitere Pulveraufbereitungsschritte zu Formkörpern verarbeitet und hervorragend gesintert werden kann.

Beispiel 1

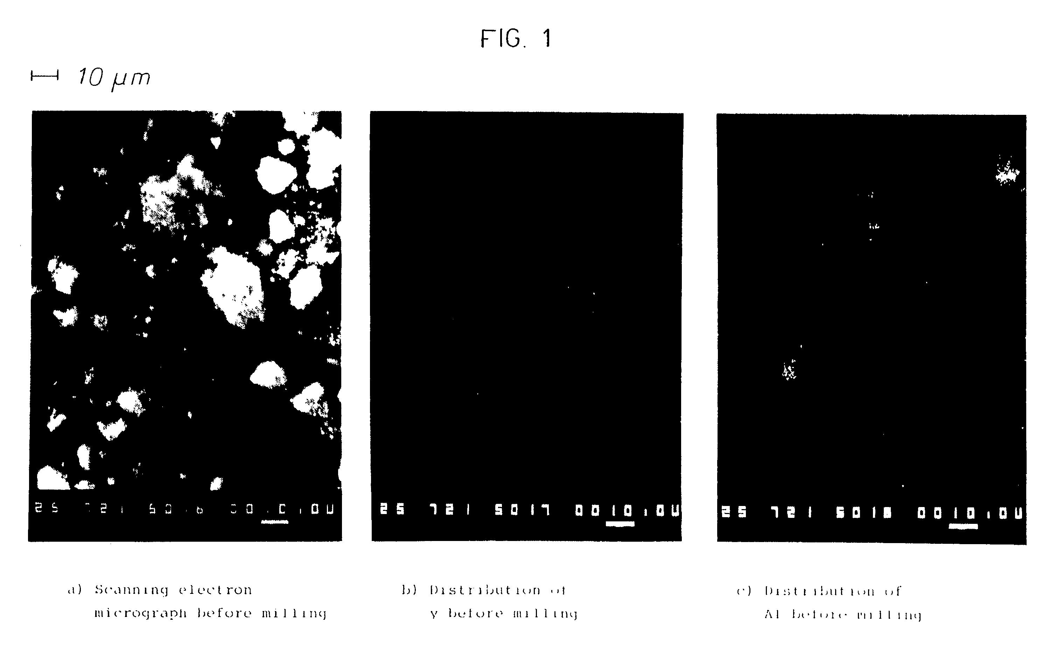

$Si_3N_4$-Pulver mit einem Gesamtgehalt an metallischen Verunreinigungen von ca. 700 ppm, speziell mit einem Eisengehalt von < 100 ppm, und einem mit einer Hegmann-Lehre nachweisbaren maximalen Korndurchmesser von 200 $\mu m$ wurde mit $Y_2O_3$- und $Al_2O_3$-Pulver in einem Mixer trocken vermischt. Der Gehalt an $Y_2O_3$ in der Gesamtmischung betrug 10 Gew.-%, der an $Al_2O_3$ 5 Gew.-%. Der mittlere Teilchendurchmesser der Pulvermischung lag bei ca. 0,8 $\mu m$. Wie in Fig. 1 a, b und c, in denen eine elektronenmikroskopische Aufnahme (SEM) einer Pulverprobe und die zugehörigen Y-und Al-Elementverteilungsbilder dargestellt sind, zu sehen ist, ist die Verteilung des $Y_2O_3$ und insbesondere des $Al_2O_3$ inhomogen.

Die Mischung wurde in einer Spiralstrahlmühle mit einem Mahldruck von 5 bar und einer Durchsatzleistung von 290 g/h gemahlen. Das Mahlgas war Stickstoff. Der Mahlkammerinnenraum war mit Vulkollan® ausgekleidet. Die Produktabscheidung erfolgte an Filtersäcken aus Dralongewebe.

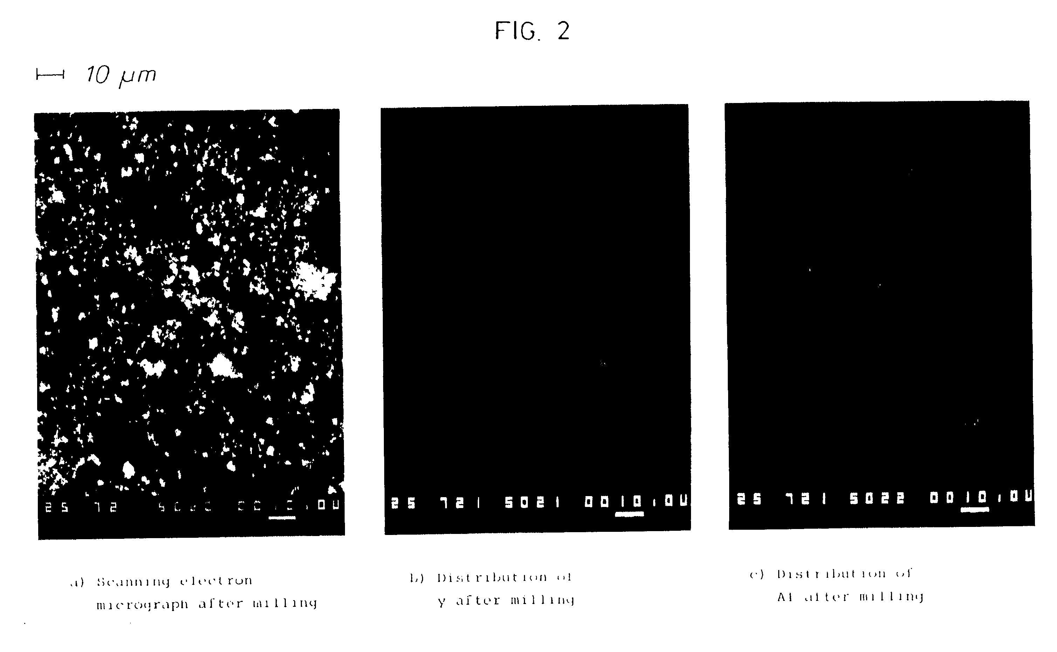

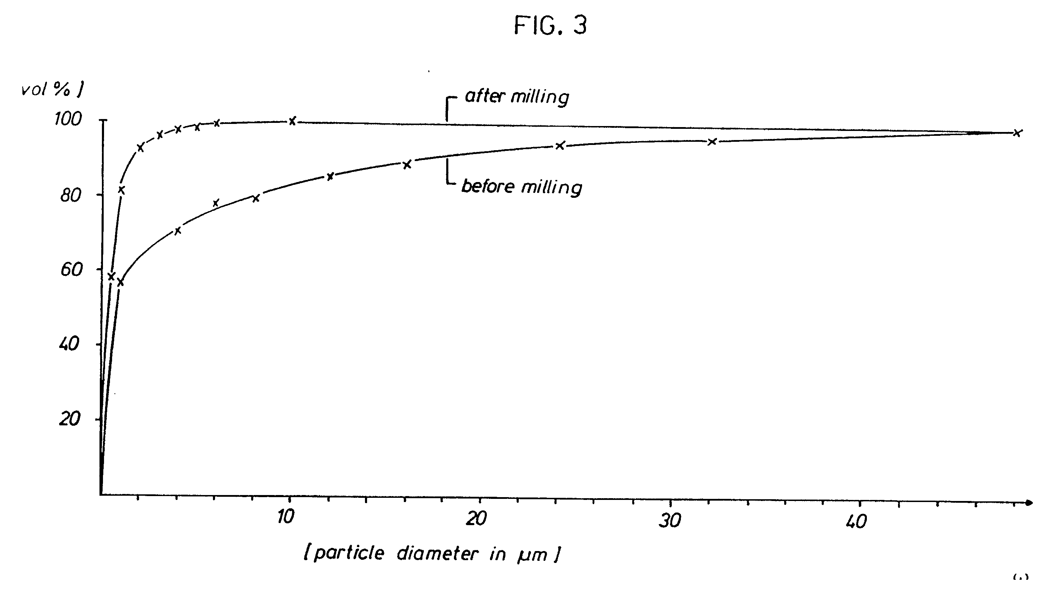

Für das gemahlene Pulver wurde ein Eisengehalt von < 100 ppm bestimmt. Der mittlere Teilchendurchmesser liegt nach der Mahlung bei ca. 0,4 $\mu m$, der mit einer Hegmann-Lehre nachweisbare maximale Korndurchmesser bei 100 $\mu m$. Die elektronenmikroskopische Aufnahme (SEM) in Fig. 2 a und die Teilchengrößenverteilungskurven in Fig. 3 zeigen deutlich die durch die Mahlung erfolgte Desagglomeration des Ausgangspulvers. Auf den Elementverteilungsbildern in Fig. 2 b und c ist die nach der Mahlung homogene Verteilung der Sinteradditive $Y_2O_3$ und $Al_2O_3$ zu erkennen.

Beispiel 2

$Si_3N_4$-Pulver mit einem Gesamtgehalt an metallischen Verunreinigungen von kleiner als 400 ppm, speziell einen Eisengehalt von < 100 ppm, und einem mit einer Ultrazentrifuge bestimmten mittleren Teilchendurchmesser von 0,5 $\mu m$ wurde mit $Y_2O_3$- und $Al_2O_3$-Pulver trocken vermischt. Der Gehalt an $Y_2O_3$ in der Gesamtmischung betrug 10 Gew.-%, der Gehalt an $Al_2O_3$ 5 Gew.-%. Der maxi-

male Teilchendurchmesser wurde mit einer Hegmann-Lehre zu 150 μm bestimmt. Die Standardabweichung von fünf Stickprobenanalysen, in denen die Y₂O₃- und Al₂O₃-Gehalte durch Röntgenfluoreszensanalysen bestimmt wurden, betrug in bezug auf den Y₂O₃-Gehalt ± 11, 3 %, in bezug auf den Al₂O₃-Gehalt ± 8,5%.

Die Mischung wurde in einer Spiralstrahlmühle mit einem Mahldruck von 5 bar und einer Durchsatzleistung von 280 g/h gemahlen. Das Mahlgas war Stickstoff. Der Mahlkammerinnenraum war mit Vulkollan® ausgekleidet. Die Produktabscheidung erfolgte an Filtersäcken aus Dralongewebe.

Für das gemahlene Pulver wurde ein Einsengehalt von 87 ppm bestimmt. Der mittlere Teilchendurchmesser lag nach der Mahlung bei 0,46 μm, der mit einer Hegmann-Lehre bestimmte maximale Korndurchmesser bei 100 μm. Die Standardabweichung von fünf Stichprobenanalysen, in denen die Y₂O₃- und Al₂O₃-Gehalte durch Röntgenfluoreszenzanalysen bestimmt wurden, betrug in bezug auf den Y₂O₃-Gehalt weniger als ± 1 %, in bezug auf den Al₂O₃-Gehalt ± 3,9 %, d.h. die Ausgangspulvermischung wurde durch die Mahlung desagglomeriert und homogenisiert.

**Patentansprüche**

1. Sinterfähiges Si₃N₄-Pulver mit Sinteradditiven mit einer mittleren Teilchengröße der Agglomerate von < 1 μm, dadurch gekennzeichnet, daß keine Teilchen mit einem Durchnmesser > 100 μm vorhanden sind, der Gesamtgehalt an metallischen Verunreinigungen < 1000 ppm, insbesondere der Eisengehalt < 200 ppm ist und die Sinteradditive gleichmäßig über die Gesamtpulvermenge verteilt sind.

2. Sinterfähiges Si₃N₄-Pulver mit Sinteradditiven gemäß Anspruch 1, dadurch gekennzeichnet, daß der Gesamtgehalt an metallischen Verunreinigungen < 200 ppm ist.

3. Sinterfähiges Si₃N₄-Pulver mit Sinteradditiven gemäß einem der Ansprüche 1 oder 2, dadurch gekennzeichnet, daß das Sinteradditiv Li₂O, BeO, MgO, B₂O₃, Al₂O₃, Ga₂O₃, Sc₂O₃, Y₂O₃, La₂O₃, TiO₂, ZrO₂, HfO₂, Cr₂O₃,ein Oxid der Seltenen Erden oder ein Gemisch von zwei oder mehreren der genannten Oxide ist.

4. Sinterfähiges Si₃N₄-Pulver mit Sinteradditiven gemäß einem der Ansprüche 1 oder 2, dadurch gekennzeichnet, daß das Sinteradditiv AlN oder Mg₃N₂ ist.

5. Verfahren zur Herstellung von sinterfähigem Si₃N₄-Pulvermit Sinteradditiven gemäß einem oder mehrerer der Ansprüche 1 bis 4, dadurch gekennzeichnet, daß ein agglomeriertes Si₃N₄-Pulver mit einem Gehalt an metallischen Verunreinigungen unter 1000 ppm, bevorzugt unter 200 ppm, und Sinteradditivpulver gemeinsam in einer Spiralstrahlmühle gemahlen werden.

6. Verfahren zur Herstellung von sinterfähigem Si₃N₄-Pulvermit Sinteradditiven gemäß Anspruch 5, dadurch gekennzeichnet, daß die Mahlkammer, die Rohrleitungen, die Produkteintrittsdüse und andere Mühlenteile, mit denen das Produkt in Berührung kommt, aus einem nichtmetallischen Werkstoff hergestellt sind.

7. Verfahren zur Herstellung von sinterfähigem Si₃N₄-Pulvermit Sinteradditiven gemäß Anspruch 6, dadurch gekennzeichnet, daß der nichtmetallische Werkstoff Vulkollan® ist.

8. Verfahren zur Herstellung von sinterfähigem Si₃N₄-Pulvermit Sinteradditiven gemäß Anspruch 6, dadurch gekennzeichnet, daß der nichtmetallische Werstoff B₄C und/oder Al₂O₃ und/oder SiC und/oder Si₃N₄ ist.

9. Verfahren zur Herstellung von sinterfähigem Si₃N₄-Pulvermit Sinteradditiven gemäß einem oder mehreren der Ansprüche 5 bis 8, dadurch gekennzeichnet, daß während der Mahlung als Mahlgas Luft, Stickstoff und/oder Argon verwendet wird.

10. Verfahren zur Herstellung von sinterfähigem Si₃N₄-Pulvermit Sinteradditiven gemäß Anspruch 9, dadurch gekennzeichnet, daß der Druck des Mahlgases zwischen 2 und 10 bar Überdruck beträgt.

**Claims**

1. A sinterable Si₃N₄ powder containing sintering additives with an average particle size of the agglomerates of < 1 μm, characterized in that small particles having a diameter of > 100 μm are present, the total content of metallic impurities is < 1,000 ppm, the iron content in particular being < 200 ppm, and the sintering additives are uniformly distributed throughout the powder mixture as a whole.

2. A sinterable Si₃N₄ powder containing sintering additives as claimed in claim 1, characterized in that the total content of metallic impurities is < 200 ppm.

3. A sinterable $Si_3N_4$ powder containing sintering additives as claimed in claim 1 or 2, characterized in that the sintering additive is $Li_2O$, BeO, MgO, $B_2O_3$, $Al_2O_3$, $Ga_2O_3$, $Sc_2O_3$, $Y_2O_3$, $La_2O_3$, $TiO_2$, $ZrO_2$, $HfO_2$, $Cr_2O_3$, an oxide of the rare earths or a mixture of two or more of the oxides mentioned.

4. A sinterable $Si_3N_4$ powder containing sintering additives as claimed in claim 1 or 2, characterized in that the sintering additive is AlN or $Mg_3N_2$.

5. A process for the production of the sinterable $Si_3N_4$ powder containing sintering additives claimed in one or more of claims 1 to 4, characterized in that an agglomerated $Si_3N_4$ powder containing less than 1,000 ppm and preferably less than 200 ppm metallic impurities and sintering additive powder are ground together in a spiral jet mill.

6. A process for the production of sinterable $Si_3N_4$ powder containing sintering additives as claimed in claim 5, characterized in that the grinding chamber, the pipes, the product inlet nozzle and other parts of the mill with which the product comes into contact are made of a non-metallic material.

7. A process for the production of sinterable $Si_3N_4$ powder containing sintering additives as claimed in claim 6, characterized in that the non-metallic material is Vulkollan®.

8. A process for the production of sinterable $Si_3N_4$ powder containing sintering additives as claimed in claim 6, characterized in that the non-metallic material is $B_4C$ and/or $Al_2O_3$ and/or SiC and/or $Si_3N_4$.

9. A process for the production of sinterable $Si_3N_4$ powder containing sintering additives as claimed in one or more of claims 5 to 8, characterized in that air, nitrogen and/or argon is/are used as grinding gas during grinding.

10. A process for the production of sinterable $Si_3N_4$ powder containing sintering additives as claimed in claim 9, characterized in that the pressure of the grinding gas is between 2 and 10 bar excess pressure.

**Revendications**

1. Poudre de $Si_3N_4$ apte au frittage comportant des additifs de frittage, avec un diamètre moyen des particules des agglomérats de

moins de 1 $\mu$m, caractérisée en ce qu'elle ne renferme pas de particules de diamètre supérieur à 100 $\mu$m, la teneur totale en impuretés métalliques est inférieure à 1000 ppm, notamment la teneur en fer est inférieure à 200 ppm et les additifs de frittage sont répartis uniformément dans la quantité totale de poudre.

2. Poudre de $Si_3N_4$ apte au frittage comportant des additifs de frittage suivant la revendication 1, caractérisée en ce que la teneur totale en impuretés métalliques est inférieure à 200 ppm.

3. Poudre de $Si_3N_4$ apte au frittage comportant des additifs de frittage suivant l'une des revendications 1 ou 2, caractérisée en ce que l'additif de frittage est $Li_2O$, BeO, MgO, $B_2O_3$, $Al_2O_3$, $Ga_2O_3$, $Sc_2O_3$, $Y_2O_3$, $La_2O_3$, $TiO_2$, $ZrO_2$, $HfO_2$, $Cr_2O_3$, un oxyde des terres rares ou un mélange de deux ou plus de deux des oxydes mentionnés.

4. Poudre de $Si_3N_4$ apte au frittage comportant des additifs de frittage suivant l'une des revendications 1 ou 2, caractérisée en ce que l'additif de frittage est AlN ou $Mg_3N_2$.

5. Procédé de production d'une poudre de $Si_3N_4$ apte au frittage comportant des additifs de frittage suivant une ou plusieurs des revendications 1 à 4, caractérisé en ce qu'une poudre de $Si_3N_4$ agglomérée ayant une teneur en impuretés métalliques inférieure à 1000 ppm, de préférence inférieure à 200 ppm, et une poudre d'additifs de frittage sont broyées ensemble dans un broyeur à jet en hélice.

6. Procédé de production de poudre de $Si_3N_4$ apte au frittage comportant des additifs de frittage suivant la revendication 5, caractérisé en ce que la chambre de broyage, les tubulures, la buse d'admission de produit et d'autres parties du broyeur avec lesquelles le produit entre en contact sont fabriquées en un matériau non métallique.

7. Procédé de production de poudre de $Si_3N_4$ apte au frittage comportant des additifs de frittage suivant la revendication 6, caractérisé en ce que le matériau non métallique consiste en Vulkollan®.

8. Procédé de production d'une poudre de $Si_3N_4$ apte au frittage comportant des additifs de frittage suivant la revendication 6, caractérisé en ce que le matériau non métallique consiste en $B_4C$ et/ou en $Al_2O_3$ et/ou en SiC et/ou en

$Si_3N_4$.

9. Procédé de production de poudre de $Si_3N_4$ apte au frittage comportant des additifs de frittage suivant une ou plusieurs des revendications 5 à 8, caractérisé en ce que de l'air, de l'azote et/ou de l'argon sont utilisés comme gaz de broyage pendant le broyage.

10. Procédé de production de poudre de $Si_3N_4$ apte au frittage comportant des additifs de frittage suivant la revendication 9, caractérisé en ce que la pression du gaz de broyage est une surpression s'élevant entre 2 et 10 bars.

FIG. 1

⊢ 10 μm

a) Scanning electron
   micrograph before milling

b) Distribution of
   y before milling

c) Distribution of
   Al before milling

EP 0 253 973 B1

FIG. 2

⊢⊣ *10 µm*

a) Scanning electron
   micrograph after milling

b) Distribution of
   Y after milling

c) Distribution of
   Al after milling

EP 0 253 973 B1

FIG. 3

EP 0 253 973 B1